# EUROPEAN PATENT APPLICATION

(11) **EP 4 580 142 A1**
(43) Date of publication of application: **02.07.2025**
(21) Application number: 24161827.1
(22) Date of filing: 06.03.2024
(51) Int. Cl.: H04L 41/022, H04L 41/069, H04L 41/0853, G06F 11/30, G06F 11/34

(54) **AUDIT-LOG FOR MANAGING NETWORK DEVICES**

(30) Priority: 29.12.2023 US 202318399862
(71) Applicant: Juniper Networks, Inc., Sunnyvale, CA 94089 (US)
(72) Inventor: CHAN, Chi Fung Michael, Sunnyvale 94089 (US); TAMBOLKAR, Anirudha, Sunnyvale 94089 (US); PATIL, Atul Bhaskarrao, Sunnyvale 94089 (US); QU, Diheng, Sunnyvale 94089 (US)
(74) Representative: D Young & Co LLP

(57) **Abstract**

A system includes computer-readable media configured to store an event store associated with a network. Processing circuitry, in response to a determination that an event associated with the network device has occurred stores, at a time series store, configuration information for a network device in the network and stores, at the event store, event information comprising a pointer to the configuration information and an indication of a time that the event occurred. In response to receiving a request for data corresponding to the event, the processing circuitry determines, using the event information in the event store, the pointer to the network information for the event, obtains, from the time series store, the configuration information for the event using the pointer, generates a response to the request based on the configuration information obtained from the time series store, and outputs the response to the request.

## Description

### RELATED APPLICATION

This application claims the benefit of U.S. Patent Application No. 18/399,862, filed December 29, 2023, the entire contents of which is incorporated herein by reference.

### TECHNICAL FIELD

The disclosure relates to computer networks, and more particularly, to management of network devices.

### BACKGROUND

A computer network is a collection of interconnected computing devices that can exchange data and share resources. A variety of devices operate to facilitate communication between the computing devices. For example, a computer network may include routers, switches, gateways, firewalls, and a variety of other devices to provide and facilitate network communication.

These network devices typically include mechanisms, such as management interfaces, for locally or remotely configuring the devices. By interacting with the management interface, a client can perform configuration tasks as well as perform operational commands to collect and view operational data of the managed devices. For example, the client may configure interface cards of the device, adjust parameters for supported network protocols, specify physical components within the device, modify routing information maintained by a router, access software modules and other resources residing on the device, and perform other configuration tasks. In addition, the client may allow a user to view current operating parameters, system logs, information related to network connectivity, network activity or other status information from the devices as well as view and react to event information received from the devices.

Network configuration services may be performed by multiple distinct devices, such as routers with service cards and/or dedicated service devices. Such services include connectivity services such as Layer Three Virtual Private Network (L3VPN), Virtual Private Local Area Network Service (VPLS), and Peer to Peer (P2P) services. Other services include network configuration services, such as Dotlq VLAN Service. Network management systems (NMSs) and NMS devices, also referred to as controllers or controller devices, may support these services such that an administrator (e.g., a network administrator) can easily create and manage these high-level network configuration services.

### SUMMARY

Particular aspects are set out in the appended independent claims. Various optional embodiments are set out in the dependent claims. In general, this disclosure describes techniques for capturing events associated with a network (e.g., deployment changes, login success/failure, logout, commit changes, etc.) for logging purposes. For example, a network management system (NMS), also referred to herein as simply a "system," may include one or more data stores (e.g., databases) storing network information, which may include configuration information (e.g., device configurations), telemetry information (e.g., device metrics), or both configuration information and telemetry information. The NMS may include one or more agents that store event information in one or more event stores. Each agent may store event information to a particular event store.

In accordance with the techniques of the disclosure, the NMS, such as through one or more agents or modules, may store, for each event, network information in a data store, such as a time series store that records historical network information. The NMS may store the event information, without the network information, in an event store. For example, the NMS may store a pointer to the network information in the data store to permit the network information to be subsequently retrieved, such as in response to an event store query. In this way, network information may not necessarily be duplicated in an event store, which may help to reduce resource utilization (e.g., storage space utilization). Reducing reduce resource utilization may help to allow event stores to include an increased quantity of event information (e.g., event information for a longer period of time) compared to systems that store events in with a copy of the network information. Network administrators may accordingly query event stores including event information that may have, with systems that store events in their entirety, been purged or deleted, which may be helpful in diagnosing and/or debugging network anomalies or faults.

In one example, a system for managing a plurality of network devices of a network, the system includes computer-readable media configured to store an event store associated with the network, and processing circuitry coupled to the computer-readable media. The processing circuitry is configured to: in response to a determination that an event associated with the network device has occurred: store at a time series store, configuration information for a network device in the network and store, at the event store, event information comprising a pointer to the configuration information stored at the time series store and an indication of a time that the event occurred. The processing circuitry is further configured to: in response to receiving a request for data corresponding to the event: determine, using the event information stored in the event store, the pointer to the network information for the event, obtain, from the time series store, the configuration information for the event using the pointer determined using the event information, generate a response to the request based on the configuration information obtained from the time series store, and output the response to the request.

In another example, a method includes, in response to a determination that an event associated with the network device has occurred: storing, by processing circuitry and at a time series store, configuration information for a network device in the network, and storing, by the processing circuitry and at the event store, event information comprising a pointer to the configuration information stored at the time series store and an indication of a time that the event occurred. In response to receiving a request for data corresponding to the event: determining, by the processing circuitry, using the event information stored in the event store, the pointer to the network information for the event, obtaining, by the processing circuitry, from the time series store, the configuration information for the event using the pointer determined using the event information, generating, by the processing circuitry, a response to the request based on the configuration information obtained from the time series store, and outputting, by the processing circuitry, the response to the request.

In another example, computer-readable media encodes instructions that, when executed, cause processing circuitry to, in response to a determination that an event associated with the network device has occurred: store at a time series store, configuration information for a network device in the network, and store, at the event store, event information comprising a pointer to the configuration information stored at the time series store and an indication of a time that the event occurred. In response to receiving a request for data corresponding to the event: determine, using the event information stored in the event store, the pointer to the network information for the event, obtain, from the time series store, the configuration information for the event using the pointer determined using the event information, generate a response to the request based on the configuration information obtained from the time series store, and output the response to the request.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example including elements of an enterprise network that are managed using a controller device, according to techniques of this disclosure.
FIG. 2 is a block diagram illustrating an example set of components for the controller device of FIG. 1, according to techniques of this disclosure.
FIG. 3 is a block diagram illustrating an example set of components for an event module of a controller device, according to techniques of this disclosure.
FIG. 4 is a block diagram illustrating an example event store, according to techniques of this disclosure.
FIG. 5 is a flowchart illustrating an example storage and output process, according to techniques of this disclosure.

### DETAILED DESCRIPTION

There can be a large number of events generated in an enterprise network. For example, a large number of events may occur during deployment of a network implementing an intent graph model (e.g., thousands per day). Each event may be associated with a large amount of data. For example, a change in intent may result in a device configuration change event including 1 megabyte (MB) of configuration information. Accordingly, high storage requirements may be necessary to store (e.g., log) event data.

Some systems may set a limit to the number of events that may be stored (e.g., 10,000 events) in an event log to alleviate storage requirements. For example, a ring buffer may be used to implement the limit, whereby, when the limit is reached, the oldest events are deleted as new events are stored (e.g., first in first out). The limit may be set to ensure events occurring shortly (e.g., hours or a day) before a particular may be stored since network administrators may be interested in these events when investigating the particular event; however, given the unpredictability as to the volume of events over time, this setting may not always ensure the desired events remain stored.

A limit to the number of events that may be stored may cause some events that would otherwise be helpful in or necessary to managing (e.g., diagnosing, maintaining, and repairing) a network to be deleted. For example, an event associated with a network anomaly or fault may be near an end of the ring buffer (e.g., the event may be 9,990^{th} event in a ring buffer having a limit of 10,000 events). At position 9,990 in a ring buffer having a limit of 10,000 events only 10 previous events can be stored (e.g., positions 9,991 through 10,000 in the ring buffer). These 10 events may not include the event that caused the network anomaly or fault, may not provide sufficient information to diagnose the network anomaly or fault, or both. Moreover, the 10 events may be deleted as new events occur, since new events may be added to the beginning of the ring buffer.

A network may generate events at a rapid rate (e.g., 10 events per minute). For example, while a network management system (NMS), is storing a device configuration change event, a plurality of other events may be occurring at the network. As such, a low latency storage device may be required to implement the ring buffer. Even with a low latency storage device, NMS may drop or lose events when a plurality of events occur, such as near or at the same time, because of communication or other bottlenecks (e.g., network or inter process communication congestion).

The techniques described herein are directed to a system, for example an NMS, that stores events (e.g., deployment changes, login success/failure, logout, commit changes, etc.) in an event store, such as in an event log, more efficiently, such as through reduced storage space utilization. For example, NMS may store event information with a pointer to network information (e.g., configuration information or telemetry information) rather than storing event information that includes network information in an event store. In this manner, rather than relying solely on an event store to store events, NMS may store event information in the event store that includes a pointer that references network information stored outside the event store.

The NMS may store configuration information separately from event information. For example, the NMS may store event information including a pointer to the data stores containing the network information rather than storing the event information with a copy of the network information (e.g., a string specifying a complete state of a configuration). In this example, rather than storing an event including a large amount of configuration information (e.g., a 1MB configuration string) in an event store, the NMS may store event information that includes a pointer (e.g., specifying a location outside of an event store that stores the network information) to the network information. In some examples, the pointer may be less than 1 kilobyte (kB) in total, which is typically much smaller than the configuration information. The pointer may provide a reference that identifies the network information as stored at the data stores outside of the event store. The event information may therefore be stored in an event store without causing a duplicate copy of the network information to be stored in the event store. In this manner, the size of the event information may be significantly reduced (e.g., 1MB or more versus less than 1kB) compared to systems that store network information in the event store, which may reduce the data usage at the event store.

The NMS may be more likely to complete storage of event information of less than 1 kB is before storing event information of 1 MB, which may help to reduce the likelihood of dropped and/or lost events due to elevated use of system processing, memory, or other resources in processing and storing larger amounts of data versus smaller amounts of data. Accordingly, the techniques described herein may improve the completeness and accuracy of an event log as well as improving system responsiveness compared to systems that store event information including network information.

Because network information is not stored in event stores, storage requirements may be further reduced by configuring the NMS to compress network information stored at a data store. Network information may not be readily compressed when stored (as part of event information) in a ring buffer event log without introducing additional processing requirements and latency, such as when compressing and decompressing event information as events are added to or accessed from a ring buffer. The compression and decompression activity increases the likelihood of loss of event information, especially at times when events are occurring simultaneously and/or at a rapid rate (e.g., 10 or more events per second). As described further below, a data store may store network information as a sequence of difference information or "diffs" to further reduce storage requirements.

The techniques described herein may facilitate network diagnosis and debugging by increasing the quantity of event information available to query. In systems relying on a limit (e.g., a ring buffer that stores 10,000 events), the size of the limit may restrict available event information to events occurring over a short period of time (e.g., hours or a day). For example, at a rate of 1 event per second, less than 3 hours of event information would be stored.

In addition, a limit to the number of events may cause the time period of stored events to be inconsistent. For example, the same ring buffer may, at times, store only an hour of event information and may, at other times, store a day or more of events. For instance, if many events occurred within the hour the ring buffer's limit may only allow storage of events for the hour and, when relatively few events per hour occur, the same limit may allow storage of a day or more of events. Accordingly, the availability of event information may become difficult to predict to a desired level of certainty for a network administrator.

In accordance with the techniques described herein, event stores may be configured to meet an administrator's requirements independent of a number of events. For example, an event store may store up to a particular time period of events (e.g., 4 weeks) and/or utilize up to a particular amount of storage (e.g., 10 gigabytes (GB)) of storage regardless of the number of events as compared to a system configured to store a maximum number of events (e.g., 10,000 events). The NMS can accordingly respond to queries using more extensive event information and network administrators can accordingly reliably query the event information to aid in diagnosing and debugging a network. For example, the NMS may be substantially more likely to be able to identify, within a predetermined time period, that a particular administrator applied a particular change to an intent model and that the change resulted in a network outage.

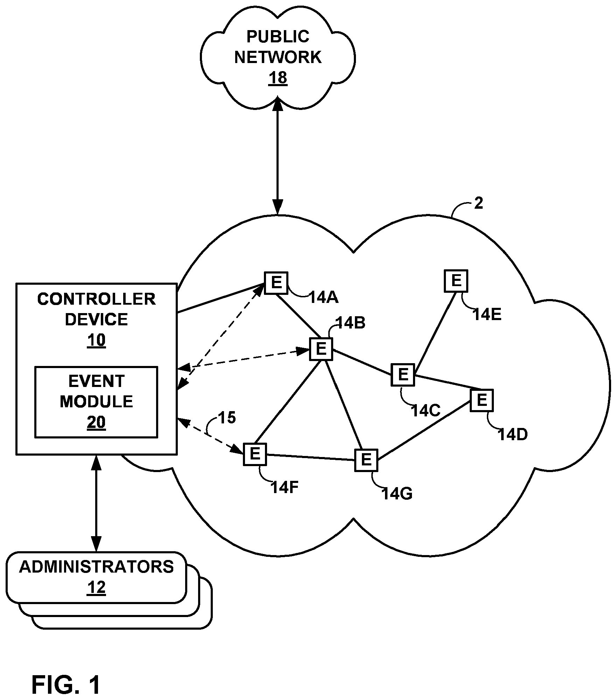

FIG. 1 is a block diagram illustrating an example including elements of an enterprise network 2 that are managed using a controller device 10. Managed nodes or elements 14A-14G (collectively, "elements 14" or "network devices 14") of enterprise network 2 include network devices interconnected via communication links to form a communication topology in order to exchange resources and information. Elements 14 (also generally referred to as network devices or remote network devices) may include, for example, routers, switches, gateways, bridges, hubs, servers, firewalls, or other intrusion detection systems (IDS) or intrusion prevention systems (IDP), computing devices, computing terminals, printers, other network devices, or a combination of such devices. While described in this disclosure as transmitting, conveying, or otherwise supporting packets, enterprise network 2 may transmit data according to any discrete data unit defined by any protocol, such as, for example, Ethernet, a cell defined by the Asynchronous Transfer Mode (ATM) protocol, Transmission Control Protocol (TCP), or a datagram defined by the User Datagram Protocol (UDP). Communication links interconnecting elements 14 may be physical links (e.g., optical, copper, and the like), wireless, or any combination thereof.

Enterprise network 2 is shown coupled to public network 18 (e.g., the Internet) via a communication link. Public network 18 may include, for example, one or more client computing devices. Public network 18 may provide access to web servers, application servers, public databases, media servers, end-user devices, and other types of network resource devices and content.

Controller device 10 is communicatively coupled to elements 14 via enterprise network 2. Controller device 10, in some examples, forms part of a device management system or "system", although only one device of the device management system is illustrated for purpose of example in FIG. 1. Controller device 10 may be coupled either directly or indirectly to the various elements 14. Once elements 14 are deployed and activated, administrator 12 uses controller device 10 to manage the network devices using a device management protocol. One example device protocol is the Simple Network Management Protocol (SNMP) that allows controller device 10 to traverse and modify management information bases (MIBs) that store configuration data within each of managed elements 14. Further details of the SNMP protocol can be found in Harrington et al., RFC 3411, "An Architecture for Describing Simple Network Management Protocol (SNMP) Management Frameworks," Network Working Group, the Internet Engineering Task Force draft, December 2002, available at http://tools.ietf.org/html/rfc3411, the entire contents of which are incorporated herein by reference.

Controller device 10, also referred to herein as a network management system (NMS) or NMS device, and elements 14 are centrally maintained by an IT group of the enterprise. Administrator 12 interacts with controller device 10 to remotely monitor and configure elements 14. For example, administrator 12 may receive alerts from controller device 10 regarding any of elements 14, view configuration data of elements 14, modify the configurations data of elements 14, add new network devices to enterprise network 2, remove existing network devices from enterprise network 2, or otherwise manipulate the enterprise network 2 and network devices therein. Although described with respect to an enterprise network, the techniques of this disclosure are applicable to other network types, public and private, including LANs, VLANs, VPNs, and the like.

Event module 20 of controller device 10 may receive events (e.g., deployment changes, login success/failure, logout, commit changes, etc.) and store event information for each event in one or more event stores. Some events may be configuration changes associated with network information, such as configuration information. For example, a deployment change event may include network information comprising configuration instructions and/or a configuration string (e.g., configuration information) for one or more network devices 14. Rather than storing event information including the network information, event module 20 may store the event information with a pointer to the network information.

A variety of events may occur in connection with network 2 and the components thereof, such as network devices 14. For example, when controller device 10 commits a configuration change to a network device 14 (e.g., stores the configuration change at a data store, such as a computer-readable storage media), controller device 10 may generate a commit change event. In some examples, controller device 10 may generate a configuration change when receiving a change to the intent graph for network 2, such as from administrator 12. A commit change event may accordingly occur when controller device 10 commits a change or a plurality of changes to the intent graph (e.g., stores the change at a data store). Controller device 10 may include network information having updated configuration information for one or more network devices 14 updated by the configuration or intent graph change in the commit change.

A deployment change event may occur when a configuration change is deployed to network 2 or a component thereof, such as network devices 14. For instance, controller device 10 may generate a deployment change event may when controller device 10 deploys an intent graph model to network devices 14. Similar to the above example, a deployment change event may also include network information. For example, controller device 10 may include network information having updated configuration information as deployed to network devices 14 or other components of network 2 in a deployment change event. As used herein, a configuration change may include, for example, a commit change (which may include a bundle of one or more changes), a deployment change, or other event generated in response changing a configuration of network devices 14 or other components of network 2.

Event module 20 may store telemetry information (e.g., device telemetry or metrics) associated with an event. For example, controller device 10 may determine whether an event has occurred based on telemetry information. For instance, controller device 10 may determine that a device metric event has occurred in response to an interface up/down event for network device 14, an interface error event indicating an error has occurred at the interface, or an interface counter event indicating the number of bytes transferred by the interface or the number of errors that have occurred at the interface.

Events may occur periodically or be event driven. For example, periodic events may occur at one or more predefined periods (e.g., every 10 seconds or every minute) and provide periodic data such as a count of bytes that have been transmitted or errors that have occurred/accumulated at a particular interface of network device 14. Event driven events may occur when an event occurs. For example, login success/failure or logout events may occur at the time a login or logout is attempted, succeeds, or fails. An interface up/down event or interface error event may occur when an interface goes up or down or when the interface experiences a communication error. Not all events may include network information. For example, login and logout events may simply indicate administrator 12 has logged in or logged out without network information (e.g., without configuration information or telemetry information).

Controller device 10 may store network information in one or more data stores. A data store may include computer-readable storage media. For example, an intent store and/or a telemetry store may store network information. For instance, event module 20 may identify the objects storing network information (for an event) at a data store and generate a pointer to the objects. In this example, event module 20 may include the pointer in the event information and store the event information in an event store without the network information. In some examples, event module 20 may replace the network information with the pointer and store event information including the pointer and excluding the network information in an event store. Excluding the network information may allow event module 20 to reduce an amount of storage required to store events and/or allow controller device 10 to avoid limiting an event store to a maximum number of events (e.g., 10,000).

As described above, an event may not be associated with network information. For example, configuration information may not be relevant to a login success/failure or logout event and accordingly may not be included with these events. As such, event module 20 may, in some examples, determine whether an event includes network information before storing event information.

In some examples, network information may be identified by one or more identifiers, such as a name (e.g., "device_config") or other identifier associated with an event. A network information identifier may be a signature or pattern to which network information conforms (e.g., a data format or regular expression). Certain event types may not include network information and, accordingly, a network information identifier may be an event type in some examples. Event module 20 may thus determine an event includes network information when a network information identifier is present and determine an event does not include network information when a network information indicator is not present.

Responsive to determining that network information is not included, event module 20 may, in some examples, simply store a complete copy of the event information. For example, event module 20 may store a complete copy of login success/failure and logout events in an event store. When event module 20 determines an event is associated with network information, event module 20 may store event information including a pointer to network information and not including the network information, such as described above.

In some examples, event module 20 may determine whether network information satisfies one or more criteria before storing event information. For example, in some cases, network information including telemetry information may be relatively small in size (e.g., 5 kb) compared to network information including device configuration information (e.g., 1 MB). As such, in some examples event module 20 may determine and compare an amount of network information relative to a threshold size (e.g., 100 kb) to determine whether to store event information including a pointer to the network information or event data including the network information.

Certain categories of network information may be stored as part of event information in some examples. For example, event module 20 may determine whether event information includes network information of a particular category. Event module 20 may store the event information including the network information or including a pointer to the network information based on the determination. For instance, event module 20 may store first telemetry information directly in the event store in response to determining that the first telemetry information is less than a threshold value (e.g., 1 kB). In this example, event module 20 may store a pointer specifying second telemetry information stored outside the event store (e.g., in a telemetry database) in response to determining that the second telemetry information is greater than a threshold value (e.g., 1 MB).

Event module 20 may receive events from various sources, including from controller device 10 or a component thereof. For example, event module 20 may receive a configuration change event from controller device 10, such as when an administrator 12 makes an intent change to network 2 via controller device 10 or a component thereof. Event module 20 may receive events associated with one or more network devices 14, such as from controller device 10 or a component thereof. For example, as the result of a commit change (e.g., storage of an intent change) relative to element 14A at controller device 10, controller device 10 may generate a configuration change event including network information (e.g., a configuration string) for element 14A. In some examples, event module 20 may receive events from elements 14 of network 2. For example, event module 20 may receive a login success/failure or logout event, without network information, from element 14B when administrator 12 logs in or logs out of element 14B.

Event module 20 may retrieve event information, such as, for example, in response to receipt of one or more queries. For example, event module 20 may receive a query from an administrator 12 to locate particular event information in an event store. As described above, event module 20 may provide the capability to store extensive event logs (e.g., 4 or more weeks of events regardless of the rate at which events occur) in an event store. Event module 20 may retrieve event information from the event store that satisfies one or more parameters or criteria in the query and present the query results (e.g., event information and/or configuration information) to administrator 12. The query results may be used to aid in the identification of a change or other event that resulted in a network anomaly or fault.

Administrator 12 may utilize the query results alone or in combination with other information available via controller device 10, such as historical configuration information (e.g., intent graph models) or historical telemetry information (e.g., device metrics) to diagnose a network anomaly or fault. For example, related historical configuration information may be replayed along with or in addition to related historical telemetry information. Controller device 10 may identify the related historical configuration information and/or historical telemetry information from the event information in the query results (e.g., a time an event occurred).

In some examples, administrator 12 uses controller device 10 or a local workstation to interact directly with elements 14 (e.g., through telnet, secure shell (SSH), or other such communication sessions). That is, elements 14 generally provide interfaces for direct interaction, such as command line interfaces (CLIs), web-based interfaces, graphical user interfaces (GUIs), or the like, by which a user can interact with the devices to directly issue text-based commands. Examples of interfaces using text-based commands may include one or more of NX-API^{™}, Arista EOS^{™}, Juniper Telemetry Interface^{™}, and gNMI telemetry collection interface. For example, these interfaces typically allow a user to interact directly with the device (e.g., through a telnet, secure shell (SSH), hypertext transfer protocol (HTTP), or other network session) to enter text in accordance with a defined syntax to submit commands to the managed element. In some examples, the user initiates an SSH session 15 with one of elements 14 (e.g., element 14F) using controller device 10, to directly configure element 14F. In this manner, a user can provide commands in a format for execution directly to elements 14.

Further, administrator 12 can also create scripts that can be submitted by controller device 10 to any or all of elements 14. For example, in addition to a CLI interface, elements 14 also provide interfaces for receiving scripts that specify the commands in accordance with a scripting language. In a sense, the scripts may be output by controller device 10 to automatically invoke corresponding remote procedure calls (RPCs) on the managed elements 14. The scripts may conform to (e.g., extensible markup language (XML)) or another data description language.

Administrator 12 uses controller device 10 to configure elements 14 to specify certain operational characteristics that further the objectives of administrator 12. For example, administrator 12 may specify for an element 14 a particular operational policy regarding security, device accessibility, traffic engineering, quality of service (QoS), network address translation (NAT), packet filtering, packet forwarding, rate limiting, or other policies. Controller device 10 uses one or more network management protocols designed for management of configuration data within managed network elements 14, such as the SNMP protocol or the Network Configuration Protocol (NETCONF) protocol or a derivative thereof, such as the Juniper Device Management Interface, to perform the configuration. In general, NETCONF provides mechanisms for configuring network devices and uses an Extensible Markup Language (XML)-based data encoding for configuration data, which may include policy data. NETCONF is described in Enns, "NETCONF Configuration Protocol," Network Working Group, RFC 4741, Dec. 2006, available at tools.ietf.org/html/rfc4741, the entire contents of which are incorporated herein by reference. Controller device 10 may establish NETCONF sessions with one or more of elements 14.

A user "intent" may represent a single source of truth, from which device configurations are derived. An intent-based networking system may help to allow administrators to describe the intended network/compute/storage state. Intents may represent a state and may be persisted across system restarts so the user does not lose the source of truth for their network's management and operation. For example, suppose the intent starts with a network topology definition with servers connected to leaf switches, where the servers host user workloads. In this example, traffic between the servers could vary over time and/or hotspots could develop in the network. For instance, a workload could be deployed on two different racks of servers causing the traffic between the communicating processes to traverse an oversubscribed fabric. Telemetry may be used to detect the oversubscription and the workload distribution may then be updated so that endpoints get moved to the same rack, hence minimizing the use of oversubscribed links in the fabric. In this example, the intent could be modeling the policy of how widely distributed (e.g., how many racks) a workload's endpoint could be spread across, and/or how much fabric links are supposed to be used by this workload. In this way, the policy could be updated based on the current network state.

Intents may be represented as data models, such as intent graph models, which may be modeled using unified graphs. Intent graph models may be represented as connected graphs, so that business policies can be implemented across intent graph models. For example, intent graph models may be represented using connected graphs having vertices connected with has-edges and reference (ref) edges. Controller device 10 may model intent graph models as unified graphs, so that the intent graph models can be represented as connected. In this manner, business policies can be implemented across intent graph models. When intents are modeled using a unified intent graph model, extending new intent support needs to extend the intent graph model and compilation logic.

Controller device 10 may be configured to accept high-level configuration data, or intents, from administrator 12 (which may be expressed as structured input parameters (e.g., according to YANG which is described in Bjorklund, "YANG-A Data Modeling Language for the Network Configuration Protocol (NETCONF)," Internet Engineering Task Force, RFC 6020, Oct. 2010, available at tools.ietf.org/html/rfc6020)).

In order to configure devices to perform the intents, a user (such as an administrator 12) may write translation programs that translate high-level configuration instructions (e.g., instructions according to an intent graph model, which may be expressed as a unified graph model) to low-level configuration instructions (e.g., instructions according to a device configuration model). As part of configuration service support, administrator 12 may provide the intent graph model and a mapping between the intent graph model to a device configuration model.

Controller device 10 may be configured to output respective sets of low-level device configuration data (e.g., device configuration additions, modifications, and removals). Additional details regarding an example process for translating high level configuration information to low-level device configuration information can be found in, e.g., Jiang et al., "TRANSLATING HIGH-LEVEL CONFIGURATION INSTRUCTIONS TO LOW-LEVEL DEVICE CONFIGURATION," U.S. Patent Application No. 15/198,657, filed June 30, 2016, the entire contents of which are hereby incorporated by reference. This disclosure refers to low-level device configuration produced from intents (e.g., produced by compiling or translating the intents) as "device-level intent configuration information" or "intent configuration," to distinguish this device-level configuration from out of band (OOB) device-level configuration. In some examples, controller device 10 may use YANG modeling for an intent graph model and low-level device configuration models. This data may contain relations across YANG entities, such as list items and containers. In some examples, controller device 10 may convert a YANG data model into a database model and convert YANG validations into data validations. Techniques for managing network devices using a graph model for high level configuration data is described in "CONFIGURING AND MANAGING NETWORK DEVICES USING PROGRAM OVERLAY ON YANG-BASED GRAPH DATABASE," U.S. Patent Application No. 15/462,465, filed March 17, 2017, the entire contents of which are hereby incorporated by reference.

Controller device 10 may receive data from one of administrators 12 representing any or all of create, update, and/or delete actions with respect to the intent graph model. Controller device 10 may be configured to use the same compilation logic for each of create, update, and delete as applied to the graph model.

In general, controllers like controller device 10 may use a hierarchical data model for intents, low-level data models, and resources. The hierarchical data model can be based on YANG or YAML. The hierarchical data model can be represented as a graph, as discussed above. Use of intents may ease the management of networks and intents are declarative. To realize intents, controller device 10 may attempt to select optimal resources from elements 14 and/or from other devices.

In general, controller device 10 may be configured to translate high-level configuration (e.g., intents received from an administrator for a plurality of managed network devices) to low-level configuration, which may also be referred to herein as "device-level configuration" (to be applied to the managed network devices themselves). In some instances, controller device 10 may receive an indication of a topology and a role for element 14A and generate device-level configuration information for element 14A. For example, administrator 12 may select a topology and role for element 14A and provide an intent. In some examples, controller device 10 may generate device-level configuration for element 14A based on the role (e.g., spine or leaf) of element 14A in the topology (e.g., a spine and leaf topology), the topology, and the intent.

Controller device 10 may store and "replay" intent graph models to allow administrator 12 to view previously deployed intent graph models, such as to diagnose or repair network anomalies or faults. As used herein, a "replay" of intent graph models may include reproducing an intent graph model previously deployed at elements 14 when another intent graph model is currently deployed at elements 14. In some examples, controller device 10 stores intent graph models currently deployed and/or previously deployed at elements 14. Referring to the example of FIG. 1 for instance, an intent graph model for network 2 may store elements or nodes 14 representing components of network 2 and communication links or edges representing connections between nodes. Controller device 10 may replay intent graph models for a particular period of time by retrieving and presenting the intent graph models of network 2 over the period of time. For example, controller device 10 may generate data representing a user interface presenting one or more intent graph models and output, for display, the data representing the user interface. Administrators 12 may utilize a replay to view changes of an intent graph model over time, such as to diagnose or repair network anomalies or faults.

In some examples, controller device 10 may store intent graph models as snapshots and difference information rather than storing individual snapshots. A snapshot of an intent graph model may include all the data (e.g., a state for each interface) for the intent graph model while difference information includes one or more changes to an intent graph model without some data stored by a snapshot. For example, controller device 10 may store difference information for a current intent graph model without data that remains constant in an intent graph model that was deployed at elements 14 immediately before the current intent graph model.

For instance, controller device 10 may store a snapshot for an intent graph model representing a complete state of network 2, which includes a representation of nodes 14, and the communication links thereof. If a commit change to the intent graph model is provided by administrators 12, for example, by deleting a communication link, controller device 10 may store difference information for the change to indicate the deletion of the communication link without information about other elements 14 or communication links of network 2.

Difference information may help to reduce storage and processing requirements for storing and retrieving intent graph models. For example, at a first day of implementing network devices, such as at a datacenter, controller device 10 may store a snapshot of an entire intent graph model. On a subsequent second day, a network administrator may add a new rack (e.g., 40 servers, 2 new leaves, etc.). In this example, difference information representing the new rack, is stored rather than another snapshot of the entire intent graph model. Controller device 10 may then generate an intent graph model for the second day using the first day snapshot and the second day difference information by applying the second day difference information to the first day snapshot. As can be seen from this example, the resource requirements may be significantly reduced using difference information. For example, the snapshot may be over 2 GBs while difference information may be substantially less, such as less than 1 kB. The second day difference information can therefore be much more rapidly retrieved and loaded, such as to local storage, as compared to a snapshot for the second day. Controller device 10 may store snapshots and difference information in one or more objects, such as on a computer-readable storage media.

In some embodiments, in response to an event, such as a configuration change event, controller device 10 may store event information that specifies an object storing difference information (e.g., updated configuration information) generated by the configuration change. For example, controller device 10 may store event information including a pointer to the object. In this manner, controller device 10 may preserve (e.g., store) network information for the event in a snapshot or difference information using a separate data store without storing a complete and duplicate copy in an event store.

In addition to replaying intent graph models, controller device 10 may be configured to replay historical metrics for network devices 14 relative to one or more intent graph models. For example, controller device 10 may receive a query indicating a time and, optionally, a network service managed by controller device 10. For instance, controller device 10 may receive the query from administrator 12 indicating a time (e.g., 6 PM Friday to 6 AM Saturday) for which the administrator is interested in understanding the state of the network. The time indicated in the query may be a single point in time, or a time range. In this example, controller device 10 may select an intent graph, from a plurality of intent graphs for network 2, that is associated with a time range that includes the time indicated by the query. For example, the controller device 10 may select an intent graph that was implemented by controller device 10 at the time indicated by the query (e.g., at 6 PM Friday). In some examples, each intent graph of the plurality of intent graphs includes nodes representing components of network 2 and edges representing connections between the nodes and each intent graph of the plurality of intent graphs is associated with a corresponding different time range (e.g., a first intent graph is from 6 PM Monday to 3 PM Wednesday and a second intent graph is from 3 PM Wednesday to 5 PM Friday). in some examples, the different time ranges are non-overlapping time ranges, in which any given time is included in only a single time range, and thus is associated with only a single intent graph. In some examples, if the time range spans over two intent graphs, controller device 10 may select a first intent model that was implemented at the beginning of the time range. In this example, controller device 10 may select a second intent model that was implemented at a time during the time range when the first intent model was changed to the second intent model.

Controller device 10 may determine a subset of telemetry data, from a database of telemetry data received from a set of network devices of network 2 over the time period that corresponds to the time range using the time indicated by the query and the network service indicated by the query. For example, controller device 10 may determine telemetry data measured by network devices 14 while controller device 10 implemented the selected graph model and at the time indicated by the query.

Controller device 10 may perform a network analysis operation using the selected intent graph and the subset of the telemetry data to generate one or more metrics. The selected intent graph may indicate an intended or desired state of a network, while the telemetry data indicates the actual state of the network in operation at one or more times. For example, controller device 10 may output the selected intent and the subset of telemetry data to a root cause fault engine (e.g., included in controller device 10 or outside of controller device 10) and the root cause fault engine outputs the one or more metrics as, for example, one or more candidate root cause faults. A root cause fault may refer to one or more issues that cause symptoms and impacts. Symptoms may be observable (e.g., using device telemetry) and may be used to match root cause faults. Impacts may refer to causal consequences of root cause faults but may not be observable. For example, a root cause fault may be a link being down (e.g., a cable is broken). In this example, symptoms may include telemetry data indicating, for example, interfaces on both ends of a link being operationally down and/or no neighbor reported for both interfaces and the impact may include degraded network bandwidth for services whose traffic could have used the down link. In some examples, the selected intent may be an intent graph model generated using difference information as described herein.

In some examples, controller device 10 may output the selected intent and the subset of telemetry data to an analytics engine and the analytics engine outputs the one or more metrics as, for example, one or more of an intent-based analytics alert, an average alignment of errors per second for a network device 14A, an average Frame Check Sequence (FCS) errors per second for network device 14A, an average number of received bits per second for network device 14A, or an average transmitted bits per second for network device 14A.

Controller device 10 may output an indication of the one or more metrics. For example, controller device 10 may generate data representing a user interface presenting the one or more metrics and output, for display, the data representing the user interface. As another example, controller device 10 may output the indication of the one or more metrics as a text message or email to the administrator. In this way, administrator 12 may review the one or more metrics (e.g., displayed in a user interface) to help to identify root cause faults (RCFs) of hardware components and/or software components of network 2.

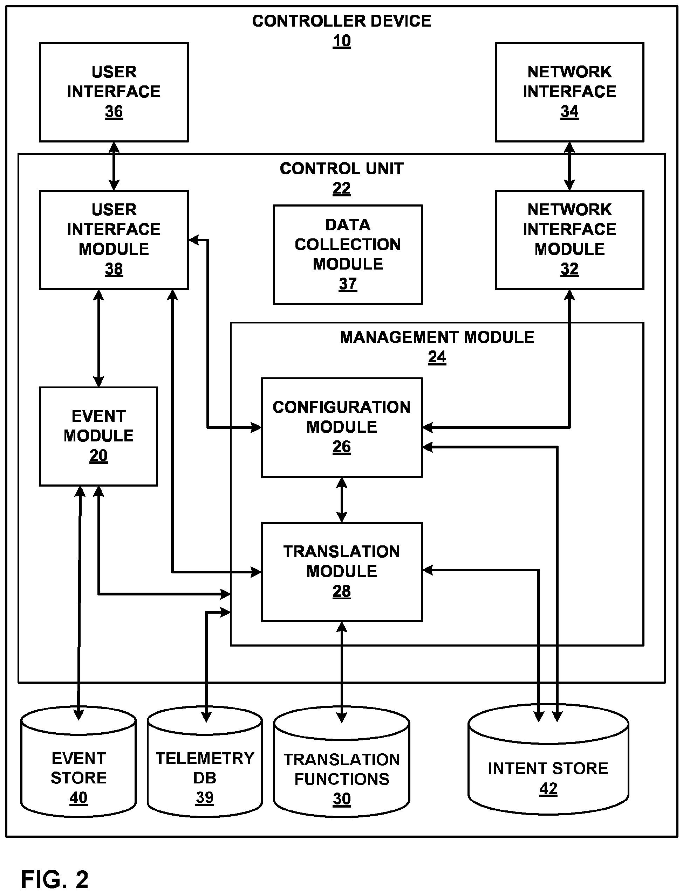

FIG. 2 is a block diagram illustrating an example set of components for controller device 10 of FIG. 1. In this example, controller device 10 includes control unit 22, network interface 34, and user interface 36. Network interface 34 represents an example interface that can communicatively couple controller device 10 to an external device (e.g., one of elements 14 of FIG. 1). Network interface 34 may represent a wireless and/or wired interface (e.g., an Ethernet interface or a wireless radio configured to communicate according to a wireless standard, such as one or more of the IEEE 802.11 wireless networking protocols (such as 802.11 a/b/g/n or other such wireless protocols)). Controller device 10 may include multiple network interfaces in various examples, although only one network interface is illustrated for purposes of example.

Control unit 22 represents any combination of hardware, software, and/or firmware for implementing the functionality attributed to control unit 22 and its constituent modules and elements. When control unit 22 includes software or firmware, control unit 22 further includes any necessary hardware for storing and executing the software or firmware, such as one or more processors or processing units. In general, a processing unit may include one or more microprocessors, digital signal processors (DSPs), application specific integrated circuits (ASICs), field programmable gate arrays (FPGAs), or any other equivalent integrated or discrete logic circuitry, as well as any combinations of such components. Furthermore, a processing unit is generally implemented using fixed and/or programmable logic circuitry.

User interface 36 represents one or more interfaces by which a user, such as administrator 12 (FIG. 1) interacts with controller device 10 (e.g., to provide input and receive output). For example, user interface 36 may represent one or more of a monitor, keyboard, mouse, touchscreen, touchpad, trackpad, speakers, camera, microphone, or the like. Furthermore, although in this example controller device 10 includes a user interface, it should be understood that administrator 12 need not directly interact with controller device 10, but instead may access controller device 10 remotely (e.g., via network interface 34).

In the example of FIG. 2, control unit 22 includes user interface module 38, network interface module 32, management module 24, and event module 20. Control unit 22 executes user interface module 38 to receive input from and/or provide output to user interface 36. For example, user interface module 38 may output event information from an event store 40 to user interface 36, such as for presentation to a user.

User interface module 38 may receive input indicating a user request for event information, configuration information, or both via user interface 36. For example, user interface module 38 may receive a request for particular event information in event store 40 (e.g., a query). In some examples, controller device 10 or another device may be configured to query metrics from multiple databases. Examples of query for multiple databases may be found, for example, in "QUERY MECHANISM FOR A NETWORK MANAGEMENT SYSTEM" in U.S. Patent Application No. 18/185,326, filed March 16, 2023, the entire contents of which is hereby incorporated by reference. The request may include one or more parameters that provide criteria defining which units of event information from a larger collection of event information (e.g., an event log in event store 40) to retrieve. Event module 20 may retrieve one or more units of event information from event store 40 based on the query. Event module 20 may utilize one or more pointers in the event information to retrieve network information from telemetry database 39 (e.g., telemetry information), or intent store 42 (e.g., configuration information). User interface module 38 may generate data representing the retrieved event information and output the data for display, such as at user interface 36.

Control unit 22 also executes network interface module 32 to send and receive data (e.g., packets) via network interface 34. User interface module 38, network interface module 32, and management module 24 may again be implemented as respective hardware units, or in software or firmware, or a combination thereof.

Control unit 22 executes management module 24 to manage various network devices (e.g., elements 14 of FIG. 1). Management includes, for example, configuring the network devices according to instructions received from a user (e.g., administrator 12 of FIG. 1) and providing the user with the ability to submit instructions to configure the network devices. In this example, management module 24 further includes configuration module 26 and translation module 28.

Management module 24 is configured to receive an intent (e.g., a high-level configuration instruction) for a set of managed network devices from a user, such as administrator 12. In some examples, management module 24 may be referred to herein as a "fabric manager." Over time, the user may update the configuration instructions (e.g., to add new services, remove existing services, or modify existing services performed by the managed devices). The intents may be structured according to, e.g., YANG. In some examples, management module 24 also provides the user with the ability to submit translation functions that translation module 28 executes to transform intents to device-specific, low-level configuration instructions, as discussed below.

Intent store 42 may include a data structure describing network information (e.g., configuration) of managed network devices (e.g., network elements 14). For example, intent store 42 may include network information indicating device identifiers (such as MAC and/or IP addresses), device type, device vendor, devices species (e.g., router, switch, bridge, hub, etc.), or the like. Intent store 42 may store network information including current configurations (e.g., intent graph model, or in some cases, both intent graph model and low-level configuration information) for the managed devices (e.g., network elements 14). Intent store 42 may include a database that comprises a unified intent graph model. In this example, intent store 42 may store at least an intent graph model currently deployed at network elements 14 and zero or more (e.g., 5) intent graph models previously deployed at network elements 14.

Intent store 42 may store a series of intent graph models representing an entire state of network 2, including network information (e.g., device configuration information) for components, such as elements 14 of network 2, at various times. For example, intent store may store individual intent graph models representing an entire state of network 2 for each of times t₀, t₁, t₂, t₃, ... tₙ where at each time t, at least one change to the entire state of network 2 has occurred. In this manner, intent store 42 may store data representing the entire state of network 2, including network information, over a period of time. In some examples, management module 24 provides intent graph models to intent store 42 for storage.

Intent store 42 may store an intent graph model as one or more snapshots, difference information or both. As used herein, a snapshot may include a complete state (e.g., both information indicating changes from a reference or previous intent graph model and information that has not changed from the reference or previous intent graph model) of each category of information used for reproducing an intent graph model. In some examples, a snapshot represents data for an initial intent graph model applied to network 2, however, in other examples, a snapshot may represent data for an intent graph model applied to network 2 after the initial intent graph.

Difference information may include a "diff" or differences between intent graph models as a whole or between individual categories of information for an intent graph model. For example, difference information may include differences between two intent graph models as a whole. Difference information may include one or more differences or changes from an instant intent graph model to a previous intent graph model that is deployed at elements 14 immediately prior to the instant intent graph model. Controller device 10 may determine the one or more changes or differences by, for example, applying various "diff" or difference techniques, including determination of shared portions of data between the intent graph models to identify differences or changes between the intent graph models. Examples of using difference information may be found, for example, in "INTENT GRAPH MODEL GENERATION USING DIFFERENCE INFORMATION" in U.S. Patent Application No. 18/543,813, filed December 18, 2023, the entire contents of which is hereby incorporated by reference.

For example, controller device 10 may generate the difference information to identify one or more of an addition, a deletion, or a modification to a network state (e.g., an interface) from a previous intent graph model to an instant intent graph model. In this example, controller device 10 may apply the one or more changes specified in the difference information to the previous intent graph model to determine the instant intent graph model. Controller device 10 may determine the previous intent graph model using a snapshot for the previous intent graph model and/or using difference information for the previous intent graph model. Intent store 42 may store intent graph models, including snapshots and difference information that represent the intent graph models as one or more objects.

Data collection module 37, which may comprise a writer and/or a reader, may be configured to receive telemetry data. Data collection module 37 may store a state of all elements for each sample. In some examples, data collection module 37 may store a state for event driven data only in response to a change. Examples of a time series database for storing telemetry data may be found, for example, in "TIME SERIES DATA COLLECTION FOR A NETWORK MANAGEMENT SYSTEM" in U.S. Patent Application No. 17/657,504, filed March 31, 2022, the entire contents of which is hereby incorporated by reference. For example, data collection module 37 may receive telemetry data from elements 14, from a set of sensor devices associated therewith, or both. Telemetry database 39 may store telemetry data for network 2 and associate the telemetry data with a time. For example, controller device 10 may store a snapshot for a first time (T1) and may store only changes in event driven data between T1 and a third time (T3).

Management module 24 may maintain a data structure in intent store 42. The data structure may include a plurality of vertices and a plurality of edges, each vertex of the plurality of vertices representing a respective network device of a plurality of network devices (e.g., network elements 14) or a respective stateless intent of a plurality of stateless intents, and the plurality of edges defining relationships between the plurality of vertices. Management module 24 may receive an indication of a stateful intent. For example, management module 24 may receive intent unified-graph-modeled configuration data for a set of managed network devices from a user, such as administrator 12.

Translation module 28, which may also be referred to herein as a "device manager," may determine which devices are managed using intent store 42. Translation module 28 determines which of translation functions 30 to execute on the high-level configuration instructions based on the information of intent store 42 (e.g., which of the devices are to receive the low-level configuration instructions). Translation module 28 then executes each of the determined translation functions of translation functions 30, providing the high-level configuration instructions to the translation functions as input and receiving low-level configuration instructions. Translation module 28 may then provide the low-level configuration instructions to configuration module 26.

After receiving the low-level configuration instructions from translation module 28, configuration module 26 sends the low-level configuration instructions to respective managed network devices for which configuration is to be updated via network interface module 32. Network interface module 32 passes the low-level configuration instructions to network interface 34. Network interface 34 forwards the low-level configuration instructions to the respective network devices.

As used herein, network information may include high-level configuration instructions, low-level configuration instructions, or both. Intent store 42 may store the network information, such as described above. For example, intent store 42 may store a snapshot of an intent graph model or difference information including network information for one or more components, such as elements 14, of network 2.

Control unit 22 executes event module 20 to store and retrieve event information and network information. In some examples, event module 20 stores and retrieves event information from event store 40 and retrieves network information from intent store 42 (e.g., configuration information) or telemetry database 39 (e.g., telemetry information). Event module 20 may store event information in one or more event logs in event store 40.

Event module 20 may receive events from various sources. For example, event module 20 may receive device metric or other events from network devices 14, such as via network interface 34 or data collection module 37. Event module 20 may receive configuration change events (e.g., commit change or deployment change events) or other events from management module 24, such as in response to a change in intent received from a user by management module 24.

As described above, an event may be associated with network information. Event module 20 may determine whether network information is included in or associated with an event. If an event includes network information, event module 20 may store event information in event store 40 including a pointer to the network information in intent store 42 or telemetry database 39 without including the network information in the event information. For example, event module 20 may store event information with a pointer to intent store 42 when an event's network information comprises configuration information (e.g., configuration strings or configuration instructions), and store event information with a pointer to telemetry database 39 when an event's network information comprises device metrics (e.g., telemetry). If an event does not include network information, event module 20 may store event information in event store 40 in its entirety.

Although user interface 36 is described for purposes of example of allowing administrator 12 (FIG. 1) to interact with controller device 10, other interfaces may be used in other examples. For example, controller device 10 may include a representational state transfer (REST) client (not shown) that may act as an interface to another device, by which administrator 12 may configure controller device 10. Likewise, administrator 12 may configure elements 14 by interacting with controller device 10 through the REST client.

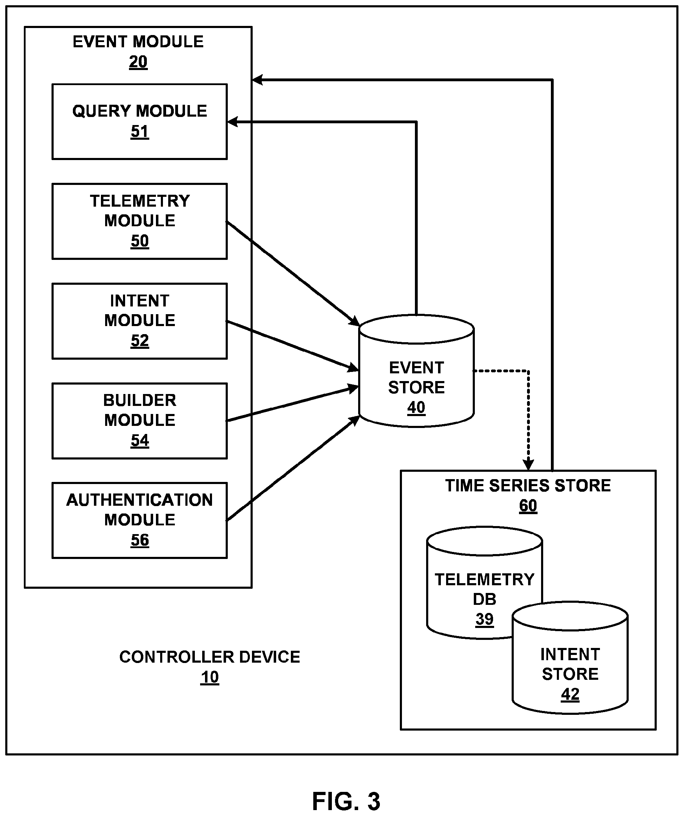

FIG. 3 is a block diagram illustrating an example set of components for an event module 20 and controller device 10, according to techniques of this disclosure. In some examples, event module 20 may comprise a number of agents that may handle one or more tasks. For instance, each agent may handle a different logging task. As shown in the example of FIG. 3, event module 20 may include a telemetry module 50, an intent module 52, a deployment module 54, a builder module 56, and an authentication module 58, which implement individual logging agents.

Telemetry module 50 may write telemetry events (e.g., device metrics) to a telemetry event log at event store 40, intent module 52 may write deployment or commit events to an intent event log at event store 40, builder module 54 may write configuration events (e.g., device configuration changes) to a configuration event log at event store 40, and authentication module 56 may write authentication events (e.g., login success/failure and logout events) to an authentication event log at event store 40. In some examples, telemetry event, intent event, configuration event, authentication event, and other event logs may be written to event store 40.

Network information may be stored in one or more data stores comprising computer-readable storage media. In the example of FIG. 3 for instance, telemetry database 39 may store network information comprising telemetry information (e.g., device metrics) and intent store 42 stores network information comprising configuration information (e.g., configuration instructions or strings). Data stores that store network information may be referred to collectively or individually as a time series store 60 in that network information may be stored as a series of historical network information associated with various times or time ranges. As represented in the example of FIG. 3 by the broken line arrow between event store 40 and time series store 60, event module 20 or an agent thereof may store event information that includes a pointer that identifies related network information in time series store 60. For example, event information for a deployment change or commit change event for a network device 14A may include a pointer to configuration information for network device 14A at time series store 60.

Individual agents (e.g., telemetry module 50, intent module 52, deployment module 54, builder module 56, and authentication module 58) may operate independently thereby allowing event module 20 to facilitate handling (e.g., logging) of a volume of events. For example, telemetry module 50 may continue to write events to a telemetry event log at event store 40 while intent module 52 writes events to an intent event log at event store 40. In some examples, one or more agents may write to the same or a distinct event log at event store 40. Though described in the above examples as being associated with particular events, event module 20 may include one or more modules that store one or more events of the same or different types in the same or a plurality of event logs at event store 40.

In some examples, a query module 51 may receive one or more queries and respond to the queries by retrieving particular event information from event store 40, network information from time series store 60, or both. For example, query module 51 may retrieve event information from event store 40 that satisfies one or more parameters in a query. For event information including a pointer, query module 51 may retrieve the corresponding network information from time series store 60 as identified by the pointer. In some examples, query module 51 may perform a unified query whereby a search is performed across multiple event logs within event store 40 and any event information that satisfies the query is retrieved from event store 40. In this manner, event module 20 may store events in multiple event logs while providing a centralized query service for retrieving event information across multiple event logs.

Examples of queries are as follows:
Example 1: A query for events between begin and end time parameters.

   ```
POST /api/audit/events/query?page=1&per_page=25&orderby=timestamp%3ADESC
 {
        "filter": "",
        "begin_time": "2023-07-03T22:57:19.506Z",
        "end_time": "2023-08-03T22:57:19.506Z",
 }
```
Example 2: A query with parameters for a year of activity on user create/update/delete events from a user IP 172.30.1.43, where the events were successful.

   ```
 POST /api/audit/events/query?page=1&per_page=100&orderby=timestamp%3ADESC
 {
filter": "user ip- 10.24.128.49' and result- 'Success' and type in 'UserCreate', 'UserUpdate,'
```

   ```
 'UserDelete']",
   "begin_time": "2022-08-03T22:57:19.506Z",
  "end_time": "2023-08-03T22:57:19.506Z",
 }
```
Example 3: A query with parameters for events involving all users other than admin and commit change activity in the last 7 days.

   ```
 POST /api/audit/events/query?page=1&per_page=25 &orderby=timestamp%3 ADESC
 {
  "filter": "type='Commit' and user not in ['admin', 'operator']",
  "begin_time": "2023-07-28T22:57:19.506Z",
 "end_time": "2023-08-03T22:57:19.506Z",
 }
```
Example 4: A query with parameters for configuration change events based on a device id for the last month.

   ```
 POST /api/audit/events/query?page=1&per_page=25 &orderby=timestamp%3ADESC
 {
  "filter": "type- DeviceConfigChange' and device_id='525400CC7B1B'",
"begin_time": "2023-07-03T22:57:19.506Z",
 "end_time": "2023-08-03T22:57:19.506Z",
```
Example 5: A query with parameters for syslog configuration create/update/delete events last month sorted by timestamp in ascending order with 50 events per page starting with page number 2.

   ```
  POST /api/audit/events/query?page=2&per_page=50&orderby=timestamp%3AASC
 {
   "filter": "type in ['SyslogCreate', 'SyslogUpdate', 'SyslogDelete']",
   "begin_time": "2023-07-03T22:57:19.506Z",
  "end_time": "2023-08-03T22:57:19.506Z",
 }
```

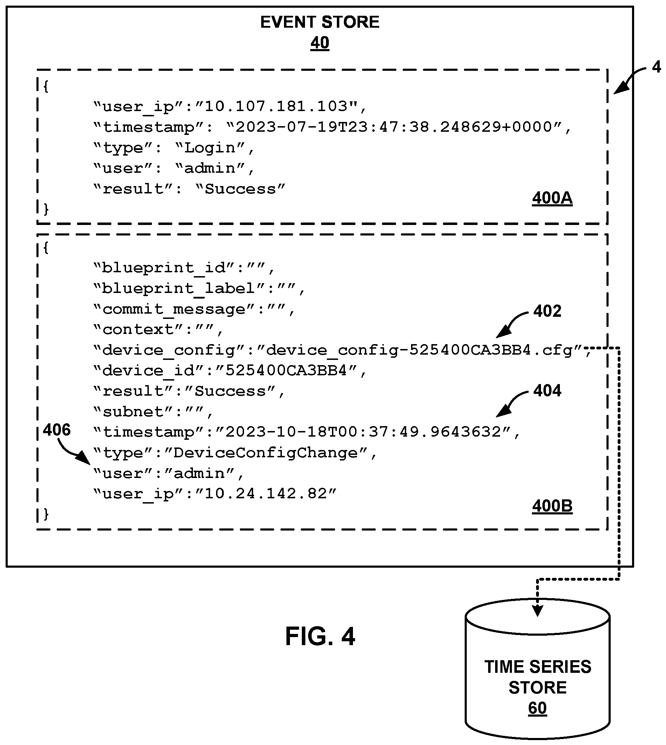

FIG. 4 is a block diagram illustrating an example event store 40, according to techniques of this disclosure. Event store 40 may store one or more individual units of event information 400, such as in one or more event logs. As shown in the example of FIG. 4, event store 40 includes first event information 400A and second event information 400B. First event information 400A and second event information 400B represent different events. For example, first event information 400A may be an authentication event (e.g., login success) and second event information 400B may be a configuration change event (e.g., commit change or deployment change event).

Event information 400 may include one or more pointers 402 to network information. Event module 20 may use pointer 402 to locate and retrieve network information from time series store 60. In the example of FIG. 4 for instance, event information 400B includes pointer 402 that identifies network information (e.g., device_config-525400CA3BB4.cfg). Event module 20 may retrieve network information that matches pointer 402 at time series store 60. For example, event module 20 may retrieve configuration instructions or a configuration string matching the "device_config-525400CA3BB4.cfg" pointer from time series store 60. The configuration instructions or configuration string may be a relatively large amount of data (e.g., 1MB). As can be seen, storage of pointer 402 reduces the size of event information significantly (e.g., less than 1 kb) which also reduces storage utilization at event store 40.

In some examples, event information 400 may include a time or timestamp 404 that indicates an occurrence, creation, storage, or other time associated with an event or event information 400. Controller device 10 may determine that an event corresponds to a time when timestamp 404 of event information 400B indicates the same time. Controller device 10 may determine that an event corresponds to a time before or after an occurrence (e.g., an event occurrence) when timestamp 404 indicates a time before or after the occurrence, respectively. In addition, event information 400 may include other event data, such as user identifiers, device identifiers, and event type identifiers. For example, user information 406 in FIG. 4 specifies "admin", which may refer to a particular administrator of administrators 12 or a group (e.g., a department) of administrators 12. Event module 20 may compare one or more query parameters to event data, pointer 402, or both to retrieve event information and/or network information as requested in a query.

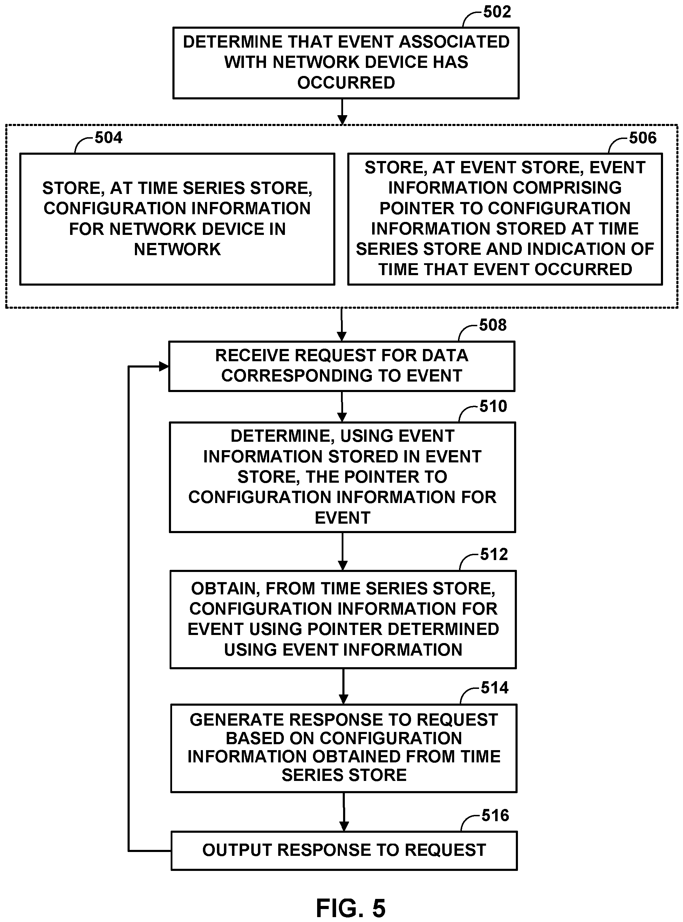

FIG. 5 is a flowchart illustrating an example process for storage and retrieval of event information, according to techniques of this disclosure. Controller device 10 may determine that an event associated with network device 14 in network 2 has occurred (502). For example, controller device 10 may determine an event or an indication of the event associated with network device 14 has occurred when the event or indication of the event is received, such as at event module 20. For instance, event module 20 may receive a configuration change event, such as from management module 24, when administrator 12 deploys or applies changes to an intent graph model through management module 24. In some examples, event module 20 may receive a configuration change event when administrator deploys a change to configuration information for a device 14. Controller device 10 may determine that the event occurred based on the indication of the event.

In response to determining that the event associated network device 14 has occurred, controller device 10 may store, at time series store 60, configuration information for the network device 14 (504). For example, controller device 10 may store one or more objects including the configuration information in time series store 60. The configuration information may include configuration instructions and/or a configuration string for network device 14.

Configuration information may include part of an intent graph model or include data associated with an intent graph model. For example, time series store 60 may store intent graph models where each intent graph model of the intent graph models were deployed to network 2 for a time range (e.g., a time range where no changes were made to the intent graph model). Each intent graph model may include an indication of the configuration information for the network device 14 and/or other component of network 2 at a time within the time range. Time series store 60 may store difference information representing changes to an intent graph model. Controller device 10 may reproduce or generate intent graph models using the difference information.

With respect to event information, controller device 10 may store, at event store 40, event information including a pointer to the configuration information stored at time series store 60 and an indication of a time that the event occurred (506). Rather than including a copy of a complete state of the configuration information (or other network information), the event information may comprise a pointer to a location (e.g., a configuration objection identifier or location of a file in a directory) of the configuration information stored at time series store 60 at step 504. Controller device 10 may repeat one or more of steps 502-506 in response to one or more additional events that occur at network 2.

Controller device 10 may store, at event store 40, event information including a pointer to the telemetry information stored at telemetry database 39 and an indication of a time that the event occurred. Telemetry database 39 may store a complete state of telemetry information for one or more times or time ranges, such as in one or more telemetry snapshots. Telemetry database 39 may store telemetry information in an event driven manner, such as by only collecting and storing telemetry information when there is a change (e.g., an update) to the telemetry information compared to a previous state of the telemetry information.

Controller device 10 may perform steps 504 and 506 simultaneously or in a distinct order. For example, controller device 10 may store the event information in response to initiating or completing storage of the configuration information. In some examples, controller device 10 may store the configuration information in response to initiating or completing storage of the event information. In some examples, controller device 10 may compress (e.g., lossless compression, such as "ZIP") the configuration information when storing the configuration information and/or the telemetry information in the time series store 60 and store the event information in event store 40 without data compression.

Controller device 10 may store event information for events including telemetry information (e.g., device metrics). For example, in response to a determination that an event including telemetry information has occurred, controller device 10 may store, at time series store 60, telemetry information indicating a metric associated with network device 14. Telemetry information indicating a metric may include one or more of an interface up/down indicator, a number of bytes transferred, or an error counter. In this example, controller device 10 may store, at event store 40, event information comprising a pointer to the telemetry information indicating the metric stored at time series store 60 and an indication of a time that the second event occurred.

For example, controller device 10 may determine an event including telemetry information has occurred in response to determining that a metric received from network device 14 indicates a bandwidth is zero when intent data or configuration information indicates that the bandwidth should be non-zero. Controller device 10 may determine an event has occurred in response to determining that the metric received from network device 14 indicates an interface is down when the intent data or configuration information indicates that the interface should be up.

In some examples, event information may include a first pointer to configuration information and a second pointer to telemetry information. For instance, controller device 10 may generate event information which includes a first pointer specifying the configuration information deployed at network device 14 at a time of the event and a second pointer specifying the telemetry information detected by network device 14 at the time of the event. In this instance, the configuration information that the first pointer specifies may indicate that a particular interface is configured to be up and the telemetry information that the second pointer specifies may indicate that the particular interface is down.

Controller device 10 may receive a request for data corresponding to the event (508) (e.g., event information associated with the event). For example, controller device 10 may receive a request in the form of a query, such as from administrator 12 via user interface 36, including one or more parameters. A query, such as in one or more parameters, may identify a time or time range, or an identifier for the event to specify the requested data corresponding to the event.

In response to receiving the request for data corresponding to the event, controller device 10 may determine, using the event information stored in event store 40, the pointer to the configuration information for the event (510). For example, controller device 10 may retrieve the event information from event store 40, such as based on a request for data corresponding to the event (e.g., a query). For example, a query may include parameters specifying a time range and controller device 10 may retrieve event information within (e.g., corresponding to) the time range (e.g., event information with a timestamp within the time range). With a query including parameters identifying a network device 14, such as a "device_id", controller device 10 may, for example, retrieve event information including the identifier of network device 14. Controller device 10 may determine the pointer to the configuration information from the retrieved event information.

Controller device 10 may obtain, from time series store 60, the configuration information for the event using the pointer (512). For example, the event information may be stored at event store 40 at step 506 and the configuration information may be that stored in time series store 60 at step 504. The pointer may be a link, reference, or other identifier of configuration information in time series store 60. Controller device 10 may retrieve data from an object, file, or other data structure identified by the pointer to obtain the configuration information from time series store 60.

Controller device 10 may generate a response to the request based on the configuration information obtained from the time series store 60 (514). For example, controller device 10 may retrieve the telemetry information, configuration information, and event information from different and/or distributed data stores at different and/or distributed storage devices. In this example, controller device 10 may generate a single response that incorporates information from each data store, such that only a single request may result in a response that includes data from multiple data sources.

Controller device 10 may output the response to the request (516). For example, controller device 10 may generate data for user interface 36 including an indication of the configuration information. For instance, controller device 10 may generate data for a user interface that displays information (e.g., telemetry data) for the response to the query. In this example, controller device 10 may cause a display of user interface 36 to present the configuration information, such as to administrator 12. In some examples, the data for a user interface may be a combination of data from multiple data stores and/or data generated using data obtained from the multiple data stores. For instance, controller device 10 may generate data for a user interface including data (e.g., a chart) indicating which interfaces are up in the configuration information and down in the telemetry information (e.g., interface mismatch information). Controller device 10 may retrieve a combination of data from multiple data stores based on query parameters, such as a time range. For example, controller device 10 may include interface mismatch information for a network device 14A that occurred during the last 24 hours in response to a query for errors in network device 14A for the last 24 hours in user interface data.

Controller device 10 may repeat steps 508-516 to respond to multiple requests (e.g., queries). Controller device 10 may perform steps 502-506 asynchronous with steps 508-516. For example, controller device 10 may concurrently generate store event information at event store 40 while responding to queries (e.g., requests for data corresponding to events).

In some examples, controller device 10 may replay intent graph models, including configuration information associated with the intent graph models, relating to an event, such as to aid administrator 12 in managing (e.g., diagnosing, maintain, and repairing) network 2. For example, to generate the response based on the configuration information, controller device 10 may determine, such as based on event data associated with the event (e.g., an event type), whether a configuration change occurred.

As described above, time series store 60 may store a plurality of intent graph models. For example, time series store 60 may store a plurality of intent graph models. Each intent graph model may have been deployed at the network for a respective time range and include the configuration information for the network device 14, or an indication of the configuration information, at the respective time range.

In some examples, controller device 10 may identify a first intent graph model in time series store 60 corresponding to before the configuration change and a second intent graph model corresponding to after the configuration change. For example, the first intent graph model may have a creation or other time before the configuration change and the second intent graph model may have a creation or other time after the configuration change. The first intent graph model and the second intent graph model may include configuration information for network device 14. As such, in some examples, to output the response, such as shown at step 516, controller device 10 may present the first intent graph model and the second intent graph model in sequence (e.g., replay the intent graph models).

Controller device 10 may determine an intent graph model (e.g., the first intent graph model or the second intent graph model) based on a pointer in the event information stored in event store 40, such as that stored at step 506. In some examples, controller device 10 may utilize a time (e.g., a timestamp) of the event to determine a time of the configuration change. Controller device 10 may determine the first intent graph model and the second intent graph model based on the time of the configuration change. For example, controller device 10 may retrieve the first intent graph model by retrieving the intent graph model, in time series store 60, before (e.g., immediately before) the time of the configuration change. Likewise, controller device may retrieve the second intent graph model by retrieving the intent graph model, in time series store 60, after (e.g., immediately after) the time of the configuration change.

In some examples, controller device 10 may replay one or more configurations of network device 14 (e.g., configuration information) at distinct times in addition to or instead of replaying intent graph models. For example, controller device 10 may determine, based on the pointer, configuration information for network device 14 corresponding to before a configuration change and configuration information for network device 14 corresponding to after the configuration change. For instance, the configuration information for network device 10 before the configuration change may have a creation or other time that occurred before the deployment or commit change. Likewise, the configuration information for network device 10 after the configuration change may have a creation or other time that occurred after the deployment or commit change. As such, in some examples, to output the response, such as shown at step 516, controller device 10 may present the configuration information for network device 14 corresponding to before and after the configuration change in sequence (e.g., replay the configuration information).

Controller device 10 may identify one or more times associated with events, such as to aid administrators 12 in managing network 2. For example, controller device 10 may determine a first time corresponding to when the deployment change or commit change is provided by administrator 12 and/or a second time corresponding to when the configuration change is applied (e.g., deployed or stored, respectively) at network device 14. With reference to FIG. 4 for instance, event information 400B illustrates a timestamp 404 that may match a time when the configuration change was provided or applied by administrator 12. In some examples, to output the response, such as at step 516, controller device 10 may include the determined times (e.g., the first time and second time) in the response. In some examples, controller device 10 may identify user information 406 for the administrator 12 that issued the configuration change and include the user information in the response.

Telemetry information may be included in the response in some examples. For example, controller device may identify telemetry information (e.g., device metrics) for network device 14 based on a time or other characteristic of the configuration change. Controller device 10 may then include the telemetry information in the response. For example, controller device 10 may include telemetry information comprising a counter indicating a number of bytes transferred by an interface of network device 14 in the response.

In some examples, after storing the event information in event store 40 and after determining the pointer, controller device 10 may remove the event information for the event from event store 40. For example, event information may be removed in keeping with a time constraint (e.g., 4 months), which may represent a retention policy. In response to a determination that the time that the event occurred does not satisfy the time constraint (e.g., an event with a timestamp older than a current date by at least the time constraint), controller device 10 may remove the event information for the event from event store 40. Controller device 10 may set the time constraint based on a user input (e.g., user configurable), such as may be received via user interface 36. In some examples, the time constrain may be determined by controller 10 or may be preconfigured.

Thus, from one perspective, there has now been described a system which includes computer-readable media configured to store an event store associated with a network. Processing circuitry, in response to a determination that an event associated with the network device has occurred stores, at a time series store, configuration information for a network device in the network and stores, at the event store, event information comprising a pointer to the configuration information and an indication of a time that the event occurred. In response to receiving a request for data corresponding to the event, the processing circuitry determines, using the event information in the event store, the pointer to the network information for the event, obtains, from the time series store, the configuration information for the event using the pointer, generates a response to the request based on the configuration information obtained from the time series store, and outputs the response to the request.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combination of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable media may include non-transitory computer-readable storage media and transient communication media. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. The term "computer-readable storage media" refers to physical storage media, and not signals, carrier waves, or other transient media. Additionally, or alternatively, a computer-readable medium can include transient media such as carrier waves and transmission media.

Various examples have been described. These and other examples are within the scope of the following claims.

## Claims

1. A system for managing a plurality of network devices of a network, the system comprising:
computer-readable media configured to store an event store associated with the network; and
processing circuitry coupled to the computer-readable media, wherein the processing circuitry is configured to:
in response to a determination that an event associated with the network device has occurred:
store at a time series store, configuration information for a network device in the network; and
store, at the event store, event information comprising a pointer to the configuration information stored at the time series store and an indication of a time that the event occurred; and
in response to receiving a request for data corresponding to the event:
determine, using the event information stored in the event store, the pointer to the network information for the event;
obtain, from the time series store, the configuration information for the event using the pointer determined using the event information;
generate a response to the request based on the configuration information obtained from the time series store; and
output the response to the request.

2. The system of claim 1,
wherein to generate the response, the processing circuitry is configured to generate data for a user interface; and
wherein to output the response, the processing circuitry is configured to cause a display of the user interface to present the configuration information.

3. The system of claims 1-2, wherein the time series store comprises a plurality of intent graph models, each intent graph model of the plurality of intent graph models being deployed at the network for a respective time range and including an indication of the configuration information for the network device at the respective time range.

4. The system of claim 3,
wherein to generate the response based on the configuration information, the processing circuitry is configured to:
determine, based on the event, a configuration change; and
determine, based on the pointer, a first intent graph model of the plurality of intent graph models, the first intent graph model corresponding to before the configuration change and a second intent graph model corresponding to after the configuration change.

5. The system of claims 1-4, wherein the event is a first event and, in response to a determination that a second event associated with the network device has occurred, the processing circuitry is configured to:
store at the time series store, telemetry information indicating a metric associated with the network device; and
store, at the event store, event information comprising a pointer to the telemetry information stored at the time series store and an indication of a time that the second event occurred.

6. The system of claims 1-5, wherein the event comprises a change to configuration information of the network device.

7. The system of claims 1-6, wherein to generate the response based on the configuration information, the processing circuitry is configured to:
determine, based on the event, a configuration change; and
determine, based on the pointer, configuration information for the network device corresponding to before the configuration change and configuration information for the network device corresponding to after the configuration change.

8. The system of claim 7, wherein to generate the response based on the configuration information, the processing circuitry is configured to:
determine a first time corresponding to when the configuration change is provided by a user; and
determine a second time corresponding to when the configuration change is applied at the network device.

9. The system of claim 8, wherein to generate the response based on the configuration information, the processing circuitry is configured to determine user information for the user providing the configuration change.

10. The system of claims 1-9, wherein to generate the response based on the configuration information, the processing circuitry is configured to:
determine, based on the event, a configuration change; and
determine, based on the configuration information, telemetry information for the network device based on the configuration change.

11. The system of claims 1-10, wherein the processing circuitry is configured to:
after storing the event information in the event store and after determining the pointer, remove the event information for the event from the event store in response to a determination that a time the event occurred satisfies a time constraint.

12. The system of claim 11, wherein the processing circuitry is configured to set the time constraint based on a user input.

13. The system of claims 1-12,
wherein to store the configuration information in the time series store, the processing circuitry is configured to compress the configuration information; and
wherein to store the event information, the processing circuitry is configured to store the event information for the event without compression.

14. A method comprising operations performed by the system of any of claims 1-13.

15. A computer-readable medium encoded with instructions for causing one or more programmable processors to perform the operations performed by the system of any of claims 1-12.
